# EUROPEAN PATENT APPLICATION

(11) **EP 4 186 718 A1**
(43) Date of publication of application: **31.05.2023**
(21) Application number: 21845457.7
(22) Date of filing: 04.06.2021
(51) Int. Cl.: B60C 27/06

(54) **RIM PROTECTOR FOR ANTI-SLIP CHAIN**

(30) Priority: 21.07.2020 JP 2020124404
(71) Applicant: Car Mate Mfg.co., Ltd., Tokyo 171-0051 (JP)
(72) Inventor: TANABE, Shigeru, Tokyo 171-0051 (JP)
(74) Representative: Lambacher, Michael
(86) International application number: PCT/JP2021/021426
(87) International publication number: WO 2022/018985

(57) **Abstract**

[Problem] Provided is a rim protector for an anti-slip chain that is also applicable to a hook with which a member shaped differently from a common chain is engaged.

[Solution] A rim protector 10 for an anti-slip chain 50 includes a hook 58 coupling a cross chain 52 and a side chain 54. The rim protector 10 includes a base 12 arranged between the hook 58 and the wheel, a positioning portion 14 projectingly installed including the base 12 as a base point and inserted into a U-shaped void 60a of a planar-surface engagement portion 60, and retaining portions 16 projectingly installed including the positioning portion 14 as a base point to ensure retaining to the intersecting engagement portions 62. The rim protector 10 is made of a flexible member or an elastic member.

## Description

### TECHNICAL FIELD

The present invention relates to a rim protector that is a protector for an anti-slip chain installed to a tire of a vehicle mainly for avoiding a scratch to a rim part of a tire wheel.

### BACKGROUND ART

In association with technical improvements of tread patterns and materials of tires, for example, a demand for studless tires on a general snow-covered road is increasing. Accordingly, even in winter, from a visual appearance perspective of a vehicle, there has been an increase in vehicles that employ wheels made of light metal, such as aluminum. On the other hand, on a seriously snow-covered road, a frozen road, or upon a sudden heavy snowfall, for example, a chain regulation is sometimes issued, and in reality, there are occasional opportunities to install an anti-slip chain.

Roughly classified, there are known anti-slip chains made of resin that are lightweight, have high installment stability to a tire, and are excellent in visual appearance, and anti-slip chains that are metallic, can be housed compactly, and are provided at relatively low price. As a carrying item for the purpose of an urgent use as described above, a compact metallic anti-slip chain is often selected.

However, since a metallic chain is made of a relatively hard metal in consideration of wear resistance, when the metallic chain comes into contact with a wheel that is made of a soft light metal, there is a risk of making a scratch on the wheel side. A common metallic chain includes a cross chain that covers a tread surface of a tire, and a side chain that comes into contact with a side wall of the tire and pulls the cross chain toward the tread surface.

A scratch made by a contact with the wheel as described above is considered to be often caused when a coupling member that couples the cross chain and the side chain referred to as a hook is caught in the rim part of the wheel due to a tightening of the side chain.

Therefore, conventionally, various types of rim protectors that cover the hook as disclosed in Patent Documents 1 to 3 have been proposed. For example, the rim protectors disclosed in Patent Documents 1 and 2 are made of resin and have structures in which a first member arranged between the hook and the wheel, and a second member arranged on an opposite side of the first member via the hook are coupled at a joint portion to be integrally formed, and the joint portion is folded in so as to place the hook between the first member and the second member.

Furthermore, the rim protector disclosed in Patent Document 3 has a configuration in which a connection element is disposed to one edge of the first member and the second member and retaining strips (web) on opposed surfaces of the first member and the second member. The rim protector thus configured is installed by being inserted into the hook such that the coupling piece is positioned at the center side of the wheel.

Patent Document 1: JP-A-2000-71728
Patent Document 2: Japanese Patent No. 5254163
Patent Document 3: Japanese Patent No. 5532263

### DISCLOSURE OF THE INVENTION

### PROBLEMS TO BE SOLVED BY THE INVENTION

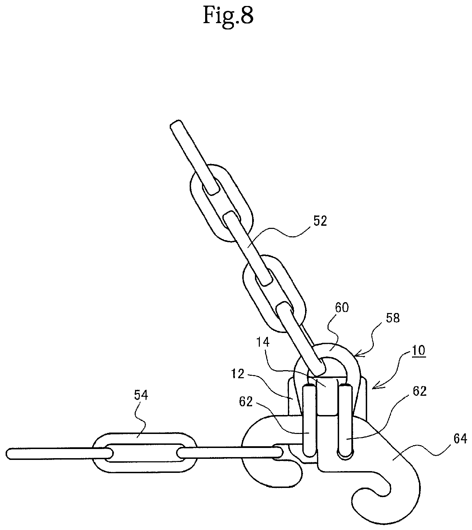

By using the rim protectors as disclosed in the above-described patent documents, it is considered to be indeed possible to avoid the hook from coming into contact with the rim of the wheel. However, a rim protector having a configuration that covers both front and back sides of the hook is problematic in that, for example, the rim protector cannot be installed when a member shaped differently from a common chain like a coupling member such as the flat hook illustrated in Fig. 8 is engaged with the hook.

Therefore, the present invention has an object to provide a rim protector for an anti-slip chain that is also applicable to a hook with which a member shaped differently from a common chain is engaged.

### SOLUTIONS TO THE PROBLEMS

In order to achieve the above-described object, the rim protector for an anti-slip chain according to the present invention is a rim protector for an anti-slip chain including a hook coupling a cross chain covering a tread surface of a tire and a side chain arranged from a side wall of the tire to an outer periphery portion of a wheel and playing the role of pulling the cross chain toward the tread surface. The rim protector includes a base arranged on a side surface on the tire or the wheel side of the hook. A side surface on an opposite side of a side surface on the base-arranged side of the hook is open type.

Furthermore, in order to achieve the above-described object, a rim protector for an anti-slip chain according to the present invention may be a rim protector for an anti-slip chain including a hook coupling a cross chain covering a tread surface of a tire and a side chain arranged from a side wall of the tire to an outer periphery portion of a wheel and playing the role of pulling the cross chain toward the tread surface. The hook has a planar-surface engagement portion formed in a U-shaped as a base point, and includes intersecting engagement portions formed by folding back both ends of the planar-surface engagement portion in a direction intersecting with a planar surface constituting the U-shape of the planar-surface engagement portion like drawing a J-shape. The rim protector includes a base arranged between the hook and the tire or the wheel, a positioning portion projectingly installed having the base as a base point and inserted into a U-shaped void of the planar-surface engagement portion, and retaining portions projectingly installed having the positioning portion as a base point and ensuring retaining to the intersecting engagement portions. The rim protector is made of a flexible member.

In the rim protector for an anti-slip chain having the above-described features, the retaining portions are preferably disposed so as to be inserted into J-shaped voids of the intersecting engagement portions. Due to having such features, the installation of the rim protector can be completed by a one-time insertion to the hook and a retaining effect can also be provided.

Furthermore, in the rim protector for an anti-slip chain having the above-described features, the base preferably includes a support portion that covers parts of folded-back portions of the intersecting engagement portions. Due to having such features, it is also possible to avoid the side chain engaging with the intersecting engagement portions from coming into contact with the wheel.

Furthermore, in the rim protector for an anti-slip chain having the above-described features, the base and the support portion can be ones having recessed portions corresponding to outer shapes of a metal material constituting the hook. Due to having such features, the installation stability of the rim protector against the hook can be improved.

### EFFECTS OF THE INVENTION

The rim protector for an anti-slip chain having the above-described features is applicable to a hook with which a member shaped differently from a common chain is engaged.

### BRIEF DESCRIPTION OF THE DRAWINGS

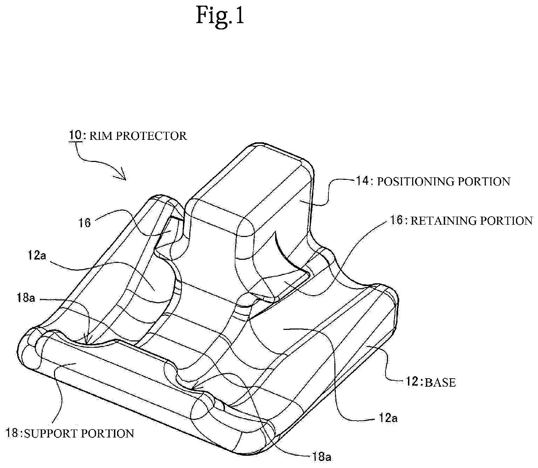

Fig. 1 is a perspective view illustrating a configuration of a rim protector according to an embodiment.
Fig. 2 is a perspective view illustrating a state where an anti-slip chain is attached to a tire.
Fig. 3 is a plan view for describing a coupled state of a cross chain and a side chain, and a shape of a hook.
Fig. 4 is a side view for describing the coupled state of the cross chain and the side chain, and the shape of the hook.

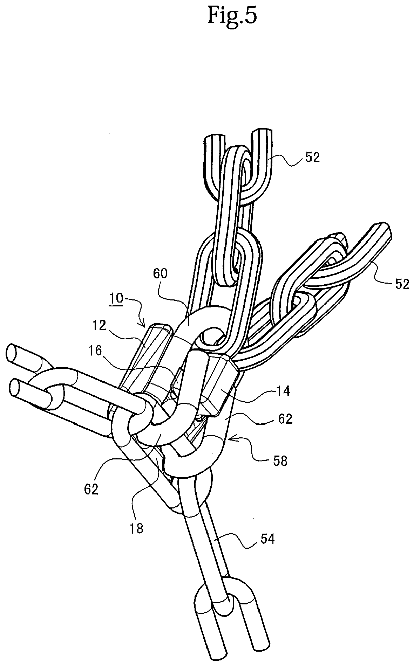

Fig. 5 is a perspective view illustrating a state where the rim protector is installed to the hook.
Fig. 6 is a transverse sectional view illustrating the state where the rim protector is installed to the hook.
Fig. 7 is a vertical cross-sectional view illustrating the state where the rim protector is installed to the hook.
Fig. 8 is a plan view illustrating a state where the rim protector is installed to the hook with which a flat hook is engaged.
Fig. 9 is a plan view illustrating a state where the rim protector is installed to the hook with which a winding device is engaged.

### DESCRIPTION OF PREFERRED EMBODIMENTS

Hereinafter, embodiments related to the rim protector for an anti-slip chain of the present invention will be described in detail with reference to the drawings. Note that, the embodiments depicted hereinafter are a part of configurations preferable for implementing the present invention, and even if configurations of respective parts are modified, it can be considered to be a part of the present invention as long as it provides the effects of the invention.

### [Anti-Slip Chain]

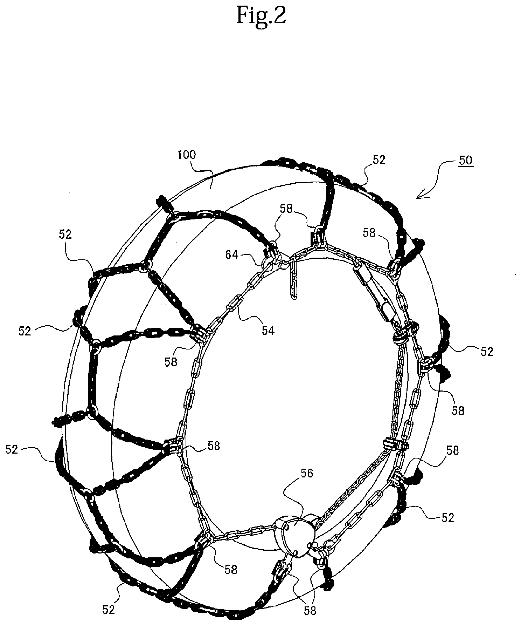

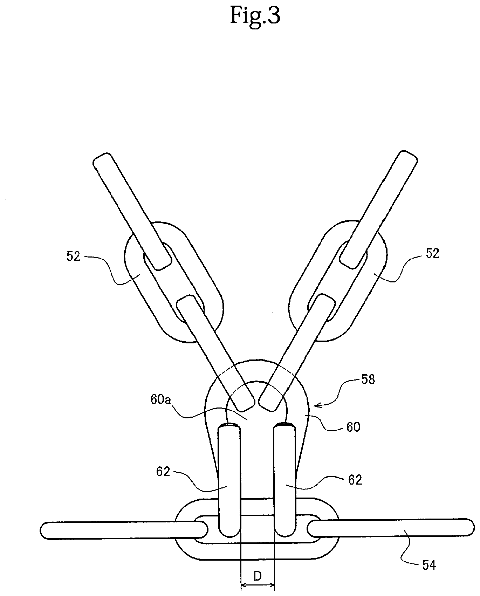

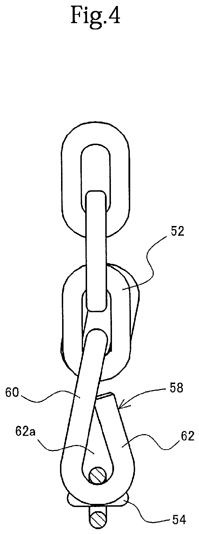

First, with reference to Fig. 2 to Fig. 4, a representative exemplary configuration of an anti-slip chain 50 that applies the rim protector for an anti-slip chain (hereinafter, simply referred to as a rim protector 10) according to the present invention will be described. Note that, in the drawings, Fig. 2 is a perspective view illustrating a state where the anti-slip chain is attached to a tire. Fig. 3 is a plan view describing a coupling portion of a cross chain and a side chain. Fig. 4 is a side view of the same.

The anti-slip chain 50 is basically configured of a cross chain 52 and a side chain 54. The cross chain 52 is a chain arranged so as to cover a tread surface of a tire 100, and for example, a chain having a rectangular cross-section is coupled in a mesh pattern. By covering the tread surface with the thus configured cross chain 52, it becomes possible to provide braking force and driving force even on a road surface on which it is difficult to gain grip by a rubber-made tread surface.

The side chain 54 is a chain arranged on both end portions in a width direction of the cross chain 52, and in a state of being installed to the tire 100, the side chain 54 is arranged on from a side wall of the tire 100 to an outer periphery portion of a wheel. End portions of the side chain 54 include coupling portions, and the side chain 54 is configured capable of being arranged along the shape of the tire 100. Especially, the side chain 54 arranged on the outer surface of the tire 100 includes a plurality of coupling portions and a winding device 56, and is configured such that a tension during installation can be adjusted such that the cross chain 52 is pressed toward the outer peripheral surface (tread surface) of the tire 100.

In the anti-slip chain 50 having such basic configuration, the cross chain 52 and the side chain 54 are each engaged with a coupling member referred to as a hook 58 and are thereby coupled to one another. The hook 58 illustrated in detail in Fig. 2 to Fig. 4 is configured by curving a metal bar material having a circular cross-sectional shape. The shape is made up by a planar-surface engagement portion 60 and the intersecting engagement portions 62. The planar-surface engagement portion 60 is an engagement portion curved to be formed into an approximate U-shape having the center of the metal bar material as a base point (see especially Fig. 3). Meanwhile, the intersecting engagement portions 62 are engagement portions configured by curving both end portions (both ends) of the planar-surface engagement portion into a J-shape like curving them back (see especially Fig. 4). Curves of the intersecting engagement portions 62 are made in a direction intersecting with a planar surface constituting the U-shape of the planar-surface engagement portion, and in this embodiment, the curves are formed such that an angle between both portions is approximately perpendicular.

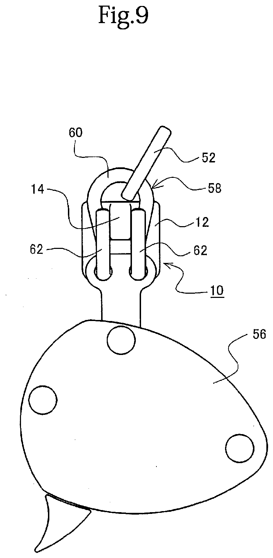

In a state where the cross chain 52 and the side chain 54 are engaged with the hook 58, basically the cross chain 52 is engaged with the planar-surface engagement portion 60, and the side chain 54 is engaged with the intersecting engagement portions 62. Note that, a member shaped differently from the chain, such as a flat hook 64 and the winding device 56, as illustrated in Fig. 8 and Fig. 9, is sometimes engaged with the intersecting engagement portions 62.

### [Rim Protector]

The rim protector 10 according to this embodiment is basically configured of a base 12, a positioning portion 14, retaining portions 16, and a support portion 18. Note that, the rim protector 10 according to the embodiment is made of an elastomer containing rubber, silicon, or urethane, for example, or a flexible member or an elastic member, such as synthetic resin.

The base 12 is an element disposed between the hook 58 constituting the anti-slip chain 50 and the wheel or the side wall of the tire 100 to avoid the hook 58 from coming into contact with the wheel. As long as the base 12 has an area that covers a projection plane of the planar-surface engagement portion 60 of the hook 58, the shape of the base 12 is not particularly limited. In this embodiment, the configuration of the base 12 has an approximately rectangular plan view shape and a flat-shaped contact surface with the wheel, and includes recessed portions 12a corresponding to cross-sectional shapes of the metal bar material constituting the hook 58 on the contact surface with the hook 58. Such configuration can avoid the hook 58 and the wheel from coming into contact with one another, and improve the installation stability as the rim protector 10.

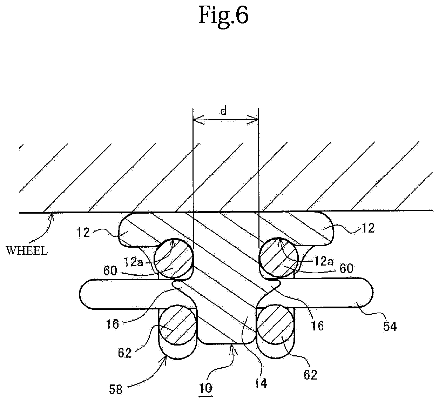

The positioning portion 14 is a protrusion projectingly installed having the base 12 as a base point and is an element inserted into a void of a portion formed in a U-shape (U-shaped void 60a) of the planar-surface engagement portion 60 constituting the hook 58. By inserting the positioning portion 14 in the U-shaped void 60a, it is possible to suppress the base 12 from becoming displaced in a circumferential direction and a radial direction of the tire 100. A width d of the positioning portion 14 (see Fig. 6) is preferably configured as a slightly wider width than a width D of the U-shaped void 60a (see Fig. 3), in other words, configured having a double plus tolerance.

The rim protector 10 according to the embodiment is made of a flexible member or an elastic member. Therefore, even when forming the positioning portion 14 with a double plus tolerance, the positioning portion 14 can be inserted into the U-shaped void 60a. Moreover, by allowing the width d of the positioning portion 14 to have a double plus tolerance with respect to the width D of the U-shaped void 60a, there will be no gap generated between the metal bar material constituting the planar-surface engagement portion 60 and the positioning portion 14 in the installed state. Thus, the installation stability of the rim protector 10 can be improved.

The retaining portions 16 are elements for avoiding a drop off of the rim protector 10 by making the positioning portion 14 difficult to be released from the U-shaped void 60a. Therefore, the retaining portions 16 according to the embodiment are projectingly installed along width directions of the planar-surface engagement portion 60, which are directions perpendicular to the positioning portion 14 as a base point, in the installed state. The retaining portions 16 are configured to be interposed in voids (J-shaped voids 62a) configured by J-shaped folded-back portions constituting the intersecting engagement portions 62.

Furthermore, the retaining portions 16 thus configured and arranged are preferably disposed in positions where the planar-surface engagement portion 60 is to be placed between the base 12 and the rim protector 10 when the rim protector 10 is installed to the hook 58. This is because the installation stability of the rim protector 10 can be improved also by determining the arranged location of the retaining portions 16 as thus.

Note that, the retaining portions 16 may be configured to be disposed to a distal end side of the positioning portion 14, but in this case, a two-step insertion is required at the installation (an insertion exceeding the planar-surface engagement portion 60 and an insertion exceeding the intersecting engagement portions 62). While the drop off prevention effect increases in such case, it may sometimes feel burdensome at the installation or may possibly cause a mistaken recognition of the installed state (believing that the installation has been completed at the first step of the insertion). In contrast to this, when having a configuration in which the retaining portions 16 are disposed so as to be interposed in the J-shaped voids 62a, the installation is completed by a one-step insertion and a retaining effect can also be provided. Accordingly, the burdensomeness at the installation and the occurrence of a mistaken recognition can be avoided.

The support portions 18 are elements that cover parts (lower half portions) of the J-shaped folded-back portions that are base end sides of the intersecting engagement portions 62 constituting the hook 58. The support portion 18 formed so as to cover from the end portion of the base 12 to the lower half portions of the intersecting engagement portions 62 can avoid the side chain 54 from becoming displaced toward the wheel side. Accordingly, the wheel being scratched by having contact with the side chain 54 can be avoided.

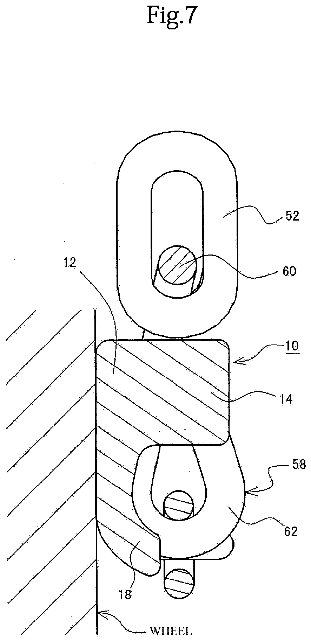

Furthermore, as illustrated in Fig. 7, by making the support portion 18 in a configuration that gradually rises along the shapes of the intersecting engagement portions 62 having the base 12 as a base point, it is also possible to avoid the rim protector 10 from becoming displaced toward the outer peripheral side of the tire 100 by the effect of the centrifugal force during travel. Note that, in this embodiment, recessed portions 18a corresponding to the cross-sectional shapes of the intersecting engagement portions 62 are disposed in the support portion 18 to enhance the installation stability of the rim protector 10.

### [Operational Effect]

The rim protector 10 having a configuration as described above is installed so as to insert the positioning portion 14 into the U-shaped void 60a from the side surface opposed to the wheel of the planar-surface engagement portion 60 of the hook 58. At the installation, the retaining portions 16 having flexibility (elasticity) are pushed and crushed into project out to the J-shaped voids 62a. Accordingly, the planar-surface engagement portion 60 is interposed between the base 12 and the retaining portions 16 allowing the installed state of the rim protector 10 to be stabilized.

### [Effect]

With the rim protector 10 having the above-described features, it is possible to avoid the hook 58 of the anti-slip chain 50 from coming into contact with the wheel and avoid the wheel from being scratched. Furthermore, since retaining of the rim protector 10 can be ensured in a state where the rim protector 10 is installed on only one of the side surfaces of the hook 58, as illustrated in Fig. 8 and Fig. 9, the rim protector 10 can be installed even when a member shaped differently from the side chain 54, such as the flat hook 64 and the winding device 56, is engaged with the hook 58.

### DESCRIPTION OF REFERENCE SIGNS

- 10: rim protector
- 12: base
- 12a: recessed portion
- 14: positioning portion
- 16: retaining portion
- 18: support portion
- 50: anti-slip chain
- 52: cross chain
- 54: side chain
- 56: winding device
- 58: hook
- 60: planar-surface engagement portion
- 60a: U-shaped void
- 62: intersecting engagement portion
- 62a: J-shaped void
- 64: flat hook
- 100: tire

## Claims

1. A rim protector for an anti-slip chain including a hook coupling a cross chain covering a tread surface of a tire and a side chain arranged from a side wall of the tire to an outer periphery portion of a wheel and playing the role of pulling the cross chain toward the tread surface, the rim protector comprising
a base arranged on a side surface on the tire or the wheel side of the hook, wherein
a side surface on an opposite side of a side surface on the base-arranged side of the hook is open type.

2. A rim protector for an anti-slip chain including a hook coupling a cross chain covering a tread surface of a tire and a side chain arranged from a side wall of the tire to an outer periphery portion of a wheel and playing the role of pulling the cross chain toward the tread surface, wherein
the hook has a planar-surface engagement portion formed in a U-shaped as a base point, and includes intersecting engagement portions formed by folding back both ends of the planar-surface engagement portion in a direction intersecting with a planar surface constituting the U-shape of the planar-surface engagement portion like drawing a J-shape, and
the rim protector comprises:
a base arranged between the hook and the tire or the wheel;
a positioning portion projectingly installed having the base as a base point and inserted into a U-shaped void of the planar-surface engagement portion; and
retaining portions projectingly installed having the positioning portion as a base point and ensuring retaining to the intersecting engagement portions, wherein
the rim protector is made of a flexible member or an elastic member.

3. The rim protector for an anti-slip chain according to claim 2, wherein
the retaining portions are disposed so as to be inserted into J-shaped voids of the intersecting engagement portions.

4. The rim protector for an anti-slip chain according to claim 2 or 3, wherein
the base includes a support portion that covers parts of folded-back portions of the intersecting engagement portions.

5. The rim protector for an anti-slip chain according to claim 4, wherein
the base and the support portion have recessed portions corresponding to outer shapes of a metal material constituting the hook.
